# EUROPEAN PATENT SPECIFICATION

(11) **EP 4 505 436 B1**
(45) Date of publication and mention of the grant of the patent: **10.12.2025**
(21) Application number: 23714756.6
(22) Date of filing: 29.03.2023
(51) Int. Cl.: G08B 13/24, H04W 52/02, H04W 52/50

(54) **CONTROLLER FOR RF-BASED SENSING ARRANGEMENT**
STEUERUNG FÜR HF-BASIERTE SENSORANORDNUNG
CONTRÔLEUR POUR AGENCEMENT DE DÉTECTION RF

(30) Priority: 05.04.2022 EP 22166615
(43) Date of publication of application: 12.02.2025
(73) Proprietor: Signify Holding B.V., 5656 AE Eindhoven (NL)
(72) Inventor: HAVERLAG, Marco, 5656 AE Eindhoven (NL); MEKENKAMP, Gerhardus, Engbertus, 5656 AE Eindhoven (NL); ZANDER, Paulus, Jacobus, 5656 AE Eindhoven (NL); VAN DER HEIJDEN, Gerardus, Wilhelmus, Theodorus, 5656 AE Eindhoven (NL); VAN GOOR, Dave, Willem, 5656 AE Eindhoven (NL)
(74) Representative: Verweij, Petronella Daniëlle
(86) International application number: PCT/EP2023/058116
(87) International publication number: WO 2023/194168

(56) References cited:
- WO-A1-2020/229441
- US-A1- 2016 353 390

## Description

### FIELD OF THE INVENTION

The present invention is directed to a controller suitable for controlling a radiofrequency-based sensing arrangement that is configured to detect activity within a sensing volume using wireless communication signals. The invention is also directed to a transmitter node, to a radiofrequency-based sensing arrangement, to a method for operating a controller and to a computer program product.

### BACKGROUND OF THE INVENTION

Document WO 2021/243597A1 describes a method, an apparatus, and a computer readable medium for wireless communication at a first wireless device, or node, in which the first wireless device transmits a radio frequency (RF) sensing waveform in a frequency band during a first time duration and transmits or receives wireless communication with a second wireless device in the frequency band during a second time duration. In an example, the wireless device or node may be in an idle mode or a discontinuous reception mode, where the wireless device may periodically monitor for communication from another device and may enter a sleep mode or a low power mode for a duration between the periodic monitoring/transmission. WO2020/229441 discloses a controller managing RF-based sensing with transmitter and receiver nodes, including modes of operation.

### SUMMARY OF THE INVENTION

It would be beneficial to enable a more efficient use of the power resources in a wireless device or node used on a radio frequency based sensing arrangement.

According to a first aspect of the present invention, a controller is described. The controller is suitable for controlling a radiofrequency-based sensing arrangement that is configured to detect activity within a sensing volume using wireless communication signals. The radiofrequency-based sensing arrangement comprises at least a transmitter node configured to provide the wireless communication signals according to a wireless communication protocol, and a receiver node configured to receive the provided wireless communication signals. At least the transmitter node is operable in an active mode in which the wireless communication signals are provided and in a sleep mode or low power mode in which no wireless communication signals are provided. The controller of the first aspect of the invention is advantageously configured to control operation of the transmitter node and the receiver node to determine a preferred transmission power amount indicative of a minimum transmission power of a wireless communication signal provided by the transmitter node that results in a reliable communication link for wireless communication between the transmitter node and the receiver node. The preferred transmission power amount is thus a transmission power that is equal or slightly greater than that transmission power threshold value above which a reliable communication link is ensured, i.e., a link between the transmitter node and receiver node where information can be communicated between them within a predetermined quality, such as, bit rate, error rate, signal to noise ratio or any other parameter known to the ordinary skilled in the art for establishing the reliability of a communication link.

Further, the controller of the first aspect of the invention is configured to control operation of at least the transmitter node in accordance with a signal provision schedule that alternates active cycles where the transmitter node is operated in the active mode and sleep cycles where the transmitter node is operated in the sleep mode, and wherein in the active mode, the wireless communication signals are provided with the determined preferred transmission power amount.

The determination of the preferred transmission power amount and the control of at least the transmitter node to provide the communication signals only in the active mode and with the preferred transmission power amount enable a better use of the power resources in a radiofrequency-based sensing arrangement, in particular in the transmitter node.

The scope of protection is defined by the enclosed claims.

In the following, the first aspect of the invention will be disclosed in details.

In one example, the transmitter node, the receiver node or both the transmitter node and the receiver node are transceiver nodes configured to provide and receive wireless communication signals. In general, the terms transmitter and receiver are used in association with a particular wireless communication signal, which is provided by that node referred to as transmitter node and received by that node referred to as receiver node. This does not necessarily imply that the node referred to as transmitter node is not configured to receive wireless communications signals or that the node referred to as receiver node is not configured to provide wireless communication signals.

The transmitter node, and in some options the receiver node too, is operable in an active mode in which the wireless communication signals are provided and in a sleep mode or low power mode in which no wireless communication signals are provided. The active mode thus indicated those periods of time in which wireless communication signals, in particular wireless communication signals used for the determination of activity in the sensing volume can be provided, if necessary. The transmitter node may for instance delay the provision of the wireless communication signals until it is operated in the active mode or, in a particular example, even discard the wireless communication signals if the intended sending time coincides with the sleep mode. During operation in the sleep mode, i.e. during any of the sleep cycles, no wireless communication signal, or at least no wireless communication signal for activity determination, is provided.

A radiofrequency-based sensing arrangement is configured to detect activity within a sensing volume using wireless communication signals. Activity in the sense of this disclosure includes presence and movement detection, of a subject or an object within the sensing volume. It may also include other subject related activities such as breathing rate, heart rate, fall detection, gestures, facial expressions and the like. The sensing volume is that region of space wherein a variation of a particular signal or communication link parameter such as a radiofrequency signal strength indicator (RSSI) or a channel state information (CSI) can be associated to a given activity, or in other words, that region of space where a given activity can be correlated to a variation of the particular signal or communication link parameter. The sensing volume thus depends on the relative location of the transmitter node and the receiver node as well as on the surroundings, which affect a multipath behavior of the provided wireless communication signals.

In a preferred example, the predetermined wireless communication protocol is low energy Bluetooth (BLE). In alternative setups, the wireless communication protocol is, Bluetooth, Wi-Fi, Thread, ZigBee or any other suitable wireless communication protocol known to the ordinary skilled in the art.

In a particular example, the controller is or forms part of an access point, router or any other possible control device of the radiofrequency-based sensing arrangement. The controller comprises a transceiver unit configured to provide and receive wireless communication signals, in particular in accordance with the predetermined wireless communication protocol. The controller advantageously wirelessly provides instructions to the transmitter node and the receiver node via the transceiver unit. In another example, the controller has a dedicated wired connection to the transmitter node, to the receiver node or to both the transmitter node and the receiver node. Using the respective link (wired or wireless), the controller controls the operation of the transmitter node and the receiver node sending operation instructions and receiving operation data, for example from the receiver node, that enables the determination of the preferred transmission power amount. The controller is also configured to determine or ascertain the signal provision schedule, which can be predetermined and can also be updatable, in dependence on the operation conditions of the radiofrequency-based sensing arrangement. In particular, the controller comprises a communication unit for communicating with the transmitter node and the receiver node, either directly or via another device, and a processing unit for ascertaining or determining the signal provision schedule, and to generate suitable operation instructions to be provided, via the communication unit, to the transmitter node and, if needed, to the receiver node, for determining the preferred transmission power amount and to operate the transmitter node in accordance with the signal provision schedule.

The preferred transmission power amount is a transmission power that is equal or slightly greater than that transmission power threshold value above which a reliable communication link is ensured. In an example, the preferred transmission power is determined in a commissioning phase under known and controlled parameters, in particular with a known number of subjects (which may include no subject) and in known positions and/or movement within the sensing volume. Depending on these parameters and on the surroundings, the metric for determining the reliability of the communication link (e.g., RSSI, CSI, etc.) has a different value, as an activity carried out by a subject (presence, movement, gestures, breathing, heart-beat, etc.) may influence the wireless communication signal as it propagates, varying the value of the chosen metric. In some scenarios, in particular where the preferred transmission power is determined under parameters associated to a low occupancy of the sensing volume (e.g. no presence of subjects therein), the transmission power threshold includes a sufficient headroom to ensure a reliable communication in situations with subjects present in the sensing volume. In other scenarios, the transmission power threshold may vary over time, e.g. it is different, preferably it increases, in case a significant activity is detected in the sensing volume, in order to ensure a reliable communication of the wireless communication signals.

**In** an example, for determining the preferred transmission power amount, the controller is configured to control a provision of a set of wireless communication signals with different transmission powers, preferably at different points in time, to ascertain a respective signal quality value of the wireless communication signals received at the receiver node, and to select, as the preferred transmission power amount, the lowest transmission power from the transmission power of the set of wireless communication signals that results in a signal quality value above a signal quality threshold. Examples of suitable signal quality parameters include a received signal strength indicator (RSSI) of the wireless communication signal received at the receiver node, a channel state information pertaining to a communication link between the transmitter node and the receiver node, a signal to noise ratio, or any other suitable parameter known to the ordinary skilled in the art. The channel state information refers to channel properties of a communication link and is indicative of how a signal propagates from a transmitter node to a receiver node and represents the combined effect of several parameters such as scattering, fading and power decay with distance. Preferably, the transmission power is lowered gradually. The probability of determining a preferred transmission power amount arbitrarily close to the minimum transmission power amount necessary for a reliable communication link increases with an increasing number of communication signals in the set of wireless communication signals.

In a particular setup, wherein the transmitter node is configured to provide the wireless communication signals in two or more frequency bands, a respective preferred transmission power amount is determined for a plurality of communication channels, each communication channel associated to a respective frequency band in which the transmitter node is operable for providing the wireless communication signals. In this setup, in the active mode, the transmitter node is operated to provide the wireless communication signals using the communication channel for which a lowest preferred transmission power amount has been determined and using the determined preferred transmission power amount. The controller may ascertain the signal quality value (e.g. the RSSI) associated to each of the wireless communication signals received in each channels and then restrict the communication between the transmitter node and the receiver node in the active mode only to that or those communication channels with the lowest preferred transmission power amount.

As stated above, the signal provision schedule, i.e., the timely distribution of active cycles and sleep cycles of the active mode and sleep mode respectively can be updated or modified with respect to an initial signal provision schedule to match the current needs of the radiofrequency-based sensing arrangement. In a particular example, the controller is further configured to ascertain activity data indicative of a detection of an activity in the sensing volume and to vary the signal provision schedule in dependence on the ascertained activity data. For instance, the duration of the active cycle and/or of the sleep cycle can be increased or reduced when no activity (e.g., presence or movement) has been detected. After an activity detection, the previous latency, i.e., timely duration of the active cycles and the sleep cycles can be restored by the controller controlling operation of the transmitter node is accordance with the suitable signal provision schedule.

In yet another example, the controller is additionally or alternatively configured to ascertain power supply data indicative of a power supply state of the transmitter node or the receiver node and to vary the signal provision schedule in dependence on the ascertained power supply data. This is particularly suitable in the case of using a transmitter node or a receiver node that is battery operated, i.e., not connected to the mains or to any other long-term power supply. The power supply data is, in this particular example, indicative of a battery state, e.g., how much power the battery is currently supplying or how much power has the battery left, or how much longer can the battery power the transmitter device assuming a normal operation of the transmitter node or the receiver node. If the power supply data is indicative that the power available is running out, or that is below a predetermined power threshold amount, the controller is configured to adapt the signal provision schedule accordingly by, for example, reducing the duration of the active cycles, or by even eliminating some of these active cycles. Additionally, or alternatively, it can also control operation of the transmitter node in a way in which some wireless communication signals are not transmitted.

In another example, the controller is additionally or alternatively configured to control operation of at least the transmitter node so that it provides at least one keepalive signal as the wireless communication signal in each active cycle during operation in the active mode according to the signal provision schedule. This is particularly advantageous in setups using BLE as wireless communication protocol. In order to maintain the communication link, the transmitter node needs to provide a radio packet within a given time window. The signal provision schedule is adapted to this time window, such that there is always an active cycle in the given time window. Advantageously, if the transmitter node does not have to provide a wireless communication signal in the frame of its normal operation, the controller ensures that the transmitter node provides a keepalive signal so maintain the communication link. A keepalive signal is thus a communication signal sent by one device to another to check that the communication link between the two is operating, or to prevent the communication link from being broken.

According to a second aspect of the invention, a transmitter node is disclosed. The transmitter node is suitable for a radiofrequency-based sensing arrangement that is configured to detect activity within a sensing volume using wireless communication signals. The transmitter node comprises a controller in accordance with the first aspect of the invention and a transmitter connected to the controller and configured to provide wireless communication signals in accordance with the predetermined wireless communication protocol.

According to this second aspect, the controller is integrated within the transmitter node, such that the connection between the controller and the transmitter is established within a shared housing, and preferably, but not necessarily, in a wired fashion.

The transmitter node of the second aspect thus shares the advantages of the controller of the first aspect of the invention.

In the following, the transmitter node of the second aspect of the invention will be described in details.

In an example, the transmitter node includes a receiving unit und can thus be referred to as a transceiver node.

In another example, the transmitter node further comprising a battery unit for providing operation power. It has been widely considered that running a dedicated radio device on battery power was not practical for current RF-based sensing applications, since the drain of a continuously active radio would soon deplete the battery unit, thus yielding an insufficient lifetime. However, a control of the operation of the transmitter node by a controller in accordance with the first aspect of invention, in particular a controller integrated within the transmitter node, enables an increase of the lifetime of the battery unit.

In a preferred example, the transmitter node further comprises a battery control unit that is arranged and configured to ascertain power supply data indicative of a battery state of the battery unit and to provide said power supply data to the controller. In particular, the controller is advantageously configured to receive the power supply data and to vary the signal provision schedule in dependence on the received power supply data.

A third aspect of the present invention is formed by a radiofrequency-based sensing arrangement that is configured to detect activity within a sensing volume using wireless communication signals. The radiofrequency-based sensing arrangement comprises at least one transmitter node configured to provide wireless communication signals according to a wireless communication protocol, wherein the at least one transmitter node is operable in an active mode in which the wireless communication signals are provided and in a sleep mode in which no wireless communication signals are provided. The radiofrequency-based sensing arrangement also comprises at least one receiver node configured to receive the transmitted wireless communication signals, and at least one controller in accordance with any the first aspect of the invention. In particular, the controller may be integrated in the transmitter node forming thus a transmitter node in accordance with the second aspect of the invention. Additionally, or altematively, the controller can be integrated in the receiver node, thus forming an additional aspect of the invention.

The radiofrequency-based sensing arrangement also comprises an activity determination unit, configured to ascertain a signal quality value of the wireless communication signal received by the receiver node, the signal quality value being correlatable to an activity within a sensing volume defined by a communication link between the transmitter node and the receiver node, and to determine an activity within the sensing volume using the ascertained signal quality value.

Thus, the radiofrequency-based sensing arrangement of the third aspect of the invention shares the advantages of the controller of the first aspect or of the transmitter node of the second aspect.

In the following, the radiofrequency-based sensing arrangement of the third aspect will be described in details.

In an example, the activity determination unit is integrated in the receiver node, such that the receiver node determines the signal quality value, e.g. the RSSI or the CSI, and also determines the presence or not of an activity in the sensing volume. In another example wherein the receiver node is a battery powered node, the activity determination unit is not integrated in the receiver node, and the receiver node, determines the signal quality value and provides said value, for instance via a wireless communication signal, to the activity determination unit. In an exemplary setup, the activity determination unit is a unit of an access point, router or any other possible control device of the radiofrequency-based sensing arrangement. In another example, both the transmitter node and the receiver node are controlled by the controller.

In an example, the signal quality value is a received signal strength indicator (RSSI), indicative of a signal strength of the wireless communication signal as received at the receiver node, or a channel state information (CSI), indicative of a channel state of a communication link between the transmitter node and the receiver node.

In an option, the RF-based sensing arrangement is, or forms part of, a wirelessly controlled lighting arrangement that comprises lighting devices and associated devices such as switches and sensors, whose operation is controlled by wireless communication signals.

A fourth aspect of the present invention is formed by a method for operating a controller suitable for controlling a radiofrequency-based sensing arrangement that is configured to detect activity within a sensing volume using wireless communication signals, and that comprises at least a transmitter node configured to provide the wireless communication signals according to a wireless communication protocol, and a receiver node configured to receive the provided wireless communication signals, wherein at least the transmitter node is operable in an active mode in which the wireless communication signals are provided and in a sleep mode in which no wireless communication signals are provided. The method of the fourth aspect of the invention comprises the steps of:
- controlling operation of the transmitter node and the receiver node to determine a preferred transmission power amount indicative of a minimum transmission power of a wireless communication signal provided by the transmitter node that results in a reliable communication link for wireless communication between the transmitter node and the receiver node; and
- controlling operation of at least the transmitter node in accordance with a signal provision schedule that altemates active cycles where the transmitter node is operated in the active mode and sleep cycles where the transmitter node is operated in the sleep mode, and wherein in the active mode, the wireless communication signals are provided with the determined preferred transmission power amount.

The method of the fourth aspect thus shares the advantages of the controller of the first aspect of the invention.

In the following, the method according to the fourth aspect of the invention will be described in details.

In an example, the step of determining the preferred transmission power amount, includes the steps of controlling a provision of a set of wireless communication signals with different transmission powers, ascertaining a respective signal quality value of the wireless communication signals received at the receiver node, and selecting, as the preferred transmission power amount, the lowest transmission power from the transmission power of the set of wireless communication signals that results in a signal quality value above a signal quality threshold.

In another example, the step of determining the preferred transmission power amount is performed for a plurality of communication channels, each associated to a respective frequency band, and wherein, the method includes providing the wireless communication signals using the communication channel for which a lowest preferred transmission power amount has been determined and using the determined preferred transmission power amount.

In yet another example, the method additionally or altematively comprises ascertaining activity data indicative of a detection of an activity in the sensing volume and varying the signal provision schedule in dependence on the ascertained activity data.

In another example, the method additionally or alternatively comprises ascertaining power supply data indicative of a power supply state of the transmitter node or the receiver node and varying the signal provision schedule in dependence on the ascertained power supply data.

In a preferred example, the method additionally or alternatively comprises controlling operation of at least the transmitter node so that it provides at least one keepalive signal as the wireless communication signal in each active cycle during operation in the active mode according to the signal provision schedule. In particular, if the active cycle is about to end, and no wireless communication signal has been provided, the method controls the provision of a keepalive signal in order to maintain the communication link between the transmitter node and the receiver node.

The method of the third aspect can be implemented by an access point, router or any other possible control device of the radiofrequency-based sensing arrangement that includes the controller, or by a transmitter node of the radiofrequency-based sensing arrangement, which comprises the controller. In the former case, the control of the transmitter node and receiver node is performed wirelessly, preferably using the predetermined wireless communication protocol. Alternatively, the control of the transmitter node and the receiver node can be done via a dedicated wired connection.

A fifth aspect of the invention is formed by a computer program product comprising instructions, which, when the program is executed by a controller, cause the controller to carry out the steps of the method of in accordance with the fourth aspect. It shall be understood that the controller of claim 1, the transmitter node of claim 7, the radiofrequency-based sensing arrangement of claim 10, the method for operating a controller of claim 13 and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a schematic block diagram of an embodiment of a radiofrequency (RF)-based sensing arrangement according to the invention,
Fig. 2 shows a first time diagram presenting the signal exchange between the transmitter node and the receiver node of an RF-based sensing arrangement according to the invention,
Fig. 3 shows a second time diagram presenting the signal exchange between the transmitter node and the receiver node of an RF-based sensing arrangement according to the invention,
Fig. 4 shows a schematic block diagram of an embodiment of a transmitter node that can be advantageously used in a radiofrequency-based sensing arrangement according to the invention, and
Fig. 5 shows a flow diagram of an embodiment of a method for operating a controller suitable for controlling a radiofrequency-based sensing arrangement according to the invention.

### DETAILED DESCRIPTION OF EMBODIMENTS

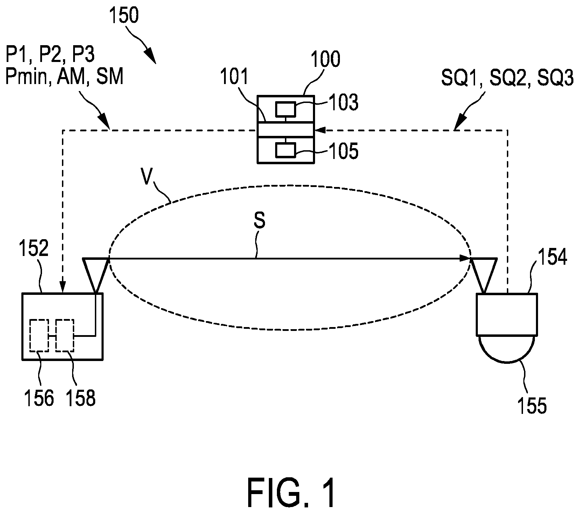

Fig. 1 shows a schematic block diagram of an embodiment of a radiofrequency (RF)-based sensing arrangement 150 according to the invention. In this particular example, the RF-based sensing arrangement is implemented as a part of a lighting arrangement comprising lighting devices and associated devices such as switches and sensors. Typically, control signals from the switches or sensors are provided wirelessly to the lighting devices (either directly or via a control device such as a router, an access point, a bridge, etc.) for controlling operation of the lighting devices, for example to turn on or off a lighting unit, to change a light color or a light intensity of the lighting unit, etc.

There is an ongoing trend in the professional and commercial lighting market to move more and more towards wirelessly connected lighting systems, which enable all kinds of new features like remote scheduling, energy monitoring, sensor-based lighting control, indoor location services and asset management.

The use of presence sensors enables reducing the power consumption of the lighting system by only switching on the lights when people are present, and dimming or even switching off sections where no people are present. Typically for the detection of presence dedicates sensors are used, which use methods like passive infrared PIR, ultrasound, or radar. More recently, it has been found that it is possible to detect people by analyzing the time evolution of signal quality values such as the strength of the received signal from wireless communication between radios in a wireless controlled network of light points using e.g. a Zigbee mesh protocol, or the bi-directional communication between a Wi-Fi router and Wi-Fi lights. RF-based presence sensing can be also performed using Wi-Fi communication between devices such as lighting devices, where a first device provides a communication signal, which can be a beacon signal, and the other devices monitor, or "sniff" how the signal behaves during propagation. This has the advantage that no additional hardware components are necessary, and can therefore offer the presence sensing functionality at lower cost that using traditional sensors.

The RF-based sensing arrangement 150 is configured to detect activity within a sensing volume V using wireless communication signals S. In the present example, activity will be restricted to presence or movement of a subject or object within the sensing volume V. However, activity in the sense of this disclosure is not restricted to presence and movement detection, of a subject or an object within the sensing volume. It may also include other subject related activities such as breathing rate, heart-rate, fall detection, gestures, facial expressions and the like. The sensing volume V is that region of space wherein a variation of a particular wireless signal or communication link parameter such as a radiofrequency signal strength indicator or channel state information can be associated to a given activity, or in other words, that region of space where a given activity is correlatable to a variation of the particular signal or communication link parameter. The sensing volume V thus depends on the relative location of the nodes involved in the communication as well as on the surroundings, which affect a multipath behavior of the provided wireless communication signals. The RF-based sensing arrangement 150 comprises a transmitter node 152, for instance a sensor or a switch or a lighting device, configured to provide wireless communication signals S according to a wireless communication protocol, for example BLE. The transmitter node is operable in an active mode in which the wireless communication signals S are provided and in a sleep mode in which no wireless communication signals are provided. The RF-based sensing arrangement 150 also comprises one receiver node 154, for example, a lighting device having a lighting unit 155 that is wirelessly controllable, configured to receive the transmitted wireless communication signals S. In addition, the RF-based sensing arrangement comprises a controller 100 that is configured to control operation of the transmitter node 152 and the receiver node 154 to determine a preferred transmission power amount Pmin indicative of a minimum transmission power of a wireless communication signal S provided by the transmitter node 152 that results in a reliable communication link CL for wireless communication between the transmitter node 152 and the receiver node 154. The controller 100 is further configured to control operation of the transmitter node 152, and optionally also of the receiver node, in accordance with a signal provision schedule AM, SM, that alternates active cycles where the transmitter node 152 is operated in the active mode AM and sleep cycles where the transmitter node 152 is operated in the sleep mode SM, an wherein in the active mode, the wireless communication signals are provided with the determined preferred transmission power amount Pmin.

In particular, the controller 100 comprises a communication unit 101 for communicating with the transmitter node 152, and optionally with the receiver node 152, either directly or via another device such as a router, access point, gateway or any other device. The controller also includes a processing unit 103 for ascertaining or determining the signal provision schedule, and to generate suitable operation instructions to be provided, via the communication unit 101, to the transmitter node 152 and, if needed, to the receiver node 154, for determining the preferred transmission power amount Pmin and to operate the transmitter node in accordance with the signal provision schedule AM, SM.

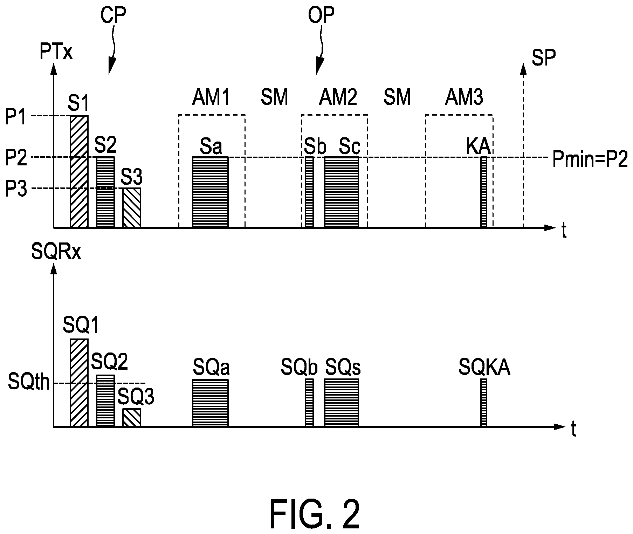

Fig. 2 shows a time diagram presenting the signal exchange between the transmitter node and the receiver node of an RF-based sensing arrangement, such as the transmitter node 152 and the receiver node 154 of RF-based sensing arrangement 150 of Fig. 1. The diagram shows a transmission power amount PTx of the wireless communication signals S provided by the transmitter node 152 and the corresponding signal quality values SQRx of the received wireless communication signals at the receiver node 154. For example, the signal quality values SQ1, SQ2 and SQ3 are received signal strength indicators RSSI, that are an indication of the amount of power associated to the respective wireless communication signal S1, S2, S3 that reaches the receiver node 154. In order to determine the preferred transmission power amount Pmin, the controller is configured to control the transmitter node to provide of a set of wireless communication signals S1, S2, S3 with different, in this particular case decreasing, transmission powers P1, P2, P3, to ascertain a respective signal quality value SQ1, SQ2, SQ3 of the wireless communication signals received at the receiver node 154, and to select, as the preferred transmission power amount Pmin, the lowest transmission power from the transmission powers P1, P2 of the set of wireless communication signals S1, S2, S3 that results in a signal quality value SQ1, SQ2 above a signal quality threshold SQth. In the example shown in Fig 2, the determination of the preferred transmission power amount Pmin is done in a commissioning phase CP typically performed prior to operation of the RF-based sensing arrangement. The controller instructs the transmitter node to provide a set of three wireless communication signals S1, S2 and S3, each with a respective transmission power amount P1, P21 and P3. The fact that in this example three signals S1, S2, S3 are provided is not to be understood as a restriction. The number of signals is arbitrary and the more signals with different (in particular decreasing) transmission power, the highest the chance of determining a preferred transmission power amount equal to the theoretical minimum for a reliable communication link. Signal S1 is received at the receiver node 154 and an RSSI value of SQ1, above the threshold SQth, is determined. S2 is received at the receiver node 154 and an RSSI value of SQ2, lower than SQ1 but still above the threshold SQth, is determined. Finally, S3 is received at the receiver node 154 and an RSSI value of SQ3, lower than both SQ1 and SQ2 and also lower than the threshold SQth, is determined. The values SQ1, SQ2 and SQ3 are sent to the controller, which then based on the threshold value, determines that P2, the transmission power P2 with which signal S2 was provided, is the preferred transmission power amount Pmin for that communication link, i. e., for the link between the transmitter node 152 and the receiver node 154. The preferred transmission power can be determined in a commissioning phase under known and controlled parameters, in particular with a known number of subjects (which may include no subject) and in known positions and/or movement within the sensing volume. Depending on these parameters and on the surroundings, the metric for determining the reliability of the communication link (e.g., RSSI, CSI, etc.) has a different value, as an activity carried out by a subject (presence, movement, gestures, breathing, heart-beat, etc.) may influence the wireless communication signal as it propagates, varying the value of the chosen metric. In some exemplary RF-based sensing arrangements, in particular where the preferred transmission power is determined using a threshold value associated to a low occupancy of the sensing volume (e.g. no presence of subjects therein), the preferred transmission power amount includes a sufficient headroom above the threshold value to ensure a reliable communication in situations with subjects present in the sensing volume. In other examples, the threshold value SQth amount may vary over time, e.g. it is different, preferably it increases, in case a significant activity is detected in the sensing volume, in order to ensure a reliable communication of the wireless communication signals

In RF-based sensing arrangements with more than one transmitter node and/or receiver node, this procedure can be performed for every communication link. The controller 100 then controls operation of the transmitter node 152 in accordance with a signal provision schedule SP that alternates active cycles where the transmitter node is operated in the active mode AM and sleep cycles where the transmitter node is operated in the sleep mode AM, and wherein in the active mode AM, the wireless communication signals Sa, Sb, Sc, KA are provided with the determined preferred transmission power amount Pmin. Sa, Sb and Sc are for example wireless communication signals for controlling the operation of the lighting unit 155 of the lighting device 154. The signal quality values SQa, SQb, SQc SQKA associated to the wireless communication signals Sa, Sb, Sc, KA, provided by the transmitter node 152 are used by an activity determination unit 105, which is configured to ascertain the signal quality value of the wireless communication signal received by the receiver node 154, to determine an activity within the sensing volume V using the ascertained signal quality value of the received signals, typically by comparing the received signal quality either directly or via a predetermined function, to a threshold value for activity determination. The signal quality value used is correlatable to an activity within the sensing volume V.

The activity determination unit 105 is in this particular example integrated in the controller 100. In other examples, the activity determination unit is integrated in the receiver node, which is then configured to provide an activity signal indicative of the detection or not of an activity within the sensing volume.

The controller 100 is further configured to control operation of the transmitter node so that it provides at least one keepalive signal KA as the wireless communication signal in each active cycle during operation in the active mode according to the signal provision schedule. This is exemplarily shown in Fig. 2. During the first active cycle AM1 of the active mode AM a signal Sa is provided, the signal Sa comprising a payload indicative of an operation or a state of the transmitter node. During the second active cycle AM2 of the active mode AM, signals Sb and Sc are provided, each with a respective payload. However, during the third active cycle AM3, the transmitter node does not need transmit any wireless communication signal and in this case, and in order to keep the communication link between the transmitter node and the receiver node, the transmitter node is instructed by the controller to provide a keepalive signal KA. The keepalive signal is thus a communication signal sent by one device to another to check that the communication link between the two is operating, or to prevent the communication link from being broken.

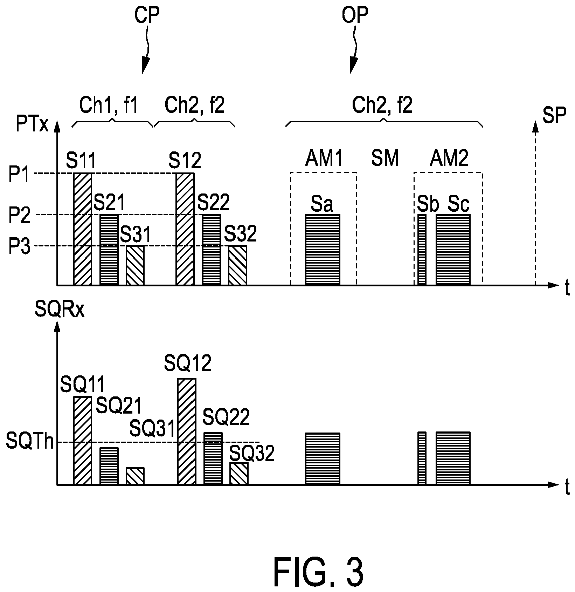

Fig. 3 shows a time diagram presenting the signal exchange between the transmitter node and the receiver node of an RF-based sensing arrangement, such as the transmitter node 152 and the receiver node 154 of RF-based sensing arrangement 150 of Fig. 1. The diagram shows a transmission power amount PTx of the wireless communication signals S provided by the transmitter node 152 and the corresponding signal quality values SQRx of the received wireless communication signals at the receiver node 154. In this example, the transmitter node is configured to provide the wireless communication signals using a plurality of communication channels Ch1, Ch2, each associated to a respective frequency band f1, f2. In the active mode, the transmitter node 152 is operated to provide the wireless communication signals Sa, Sb, Sc using the communication channel Ch2 for which a lowest preferred transmission power amount has been determined and using the determined preferred transmission power amount Pmin. Thus, during the commissioning phase, the controller 100 controls the transmitter node 153 to provide one or more wireless communication signals with a corresponding transmission power amount for each of the communication channels available Ch1, Ch2 available for the transmitter node. For instance, the transmitter node is controlled to provide, using a first channel Ch1, wireless communication signals S11, S21 and S31 with respective power amounts P1, P2 and P3. The signal quality values of these signals as received by the receiver node 154 is SQ11, SQ21 and SQ31. The preferred transmission power amount associated to channel 1 is thus P1, since only the associated signal quality value SQ11 is above the threshold SQth. The transmitter node 152 in then instructed to provide wireless communication signals S12, S22 and S32 using communication channel Ch2. The provision of these is shown to happen subsequently to the provision of S11, S21 and S31. However, the provision of S12, S22 and S32 may also happen simultaneously. Also, it is shown that the transmission power amount of signals S12, S22 and S32 is equal to the transmission power amount of signals S11, S21 and S31. However, in other examples the transmission power amounts used for the different channels may differ. The receiver node 154 receives the wireless communication signals S12, S22 and S32 with an associated signal quality value of SQ12, SQ22 and SQ32 respectively. For channel 2, the preferred transmission power amount is P2, which is lower than the preferred transmission value P1 of channel 1. Therefore, the controller 100 is configured to control, in an operation phase OP, operation of the transmitter node 154 in accordance with a signal provision schedule SP that alternates active cycles AM1, AM2 where the transmitter node 152 is operated in the active mode AM and sleep cycles SM where the transmitter node is operated in the sleep mode, an wherein in the active mode, the wireless communication signals Sa, Sb, Sc are provided with the determined preferred transmission power amount P2.

To improve the use of the power resources, signal communication within the RF-based sensing arrangement is done with a wireless communication protocol that allows for the transmitter node 152 (e.g. the sensor or switch) to operate in a sleep mode SM for a fraction of the time using a time synchronized protocol. The transmitter node only wakes up and operates in an active mode AM at agreed moments to send/receive a radio packet and then go to sleep again. An example of such a RF protocol is Bluetooth Low Energy (BLE). A BLE device can connect to another BLE device and maintains this connection by sending very short ('empty') packets, also referred to as keepalive signals, between the transmitter node and the receiver node. Upon setting up the initial connection the devices agree which time interval between communication they will use and on which set of frequencies they will communicate. In-between these connection intervals the transmitter node, and optionally also the receiver node, goes to sleep, only to wake up just before the next connection interval. Preferably, the sleep cycles are at least 50%, preferably at least 90%, more preferably at least 99%, even more preferably at least 99.9%, and most preferably at least 99.99% of the operation time. In other words, and considering a full cycle the addition of an active cycle and a consecutive sleep cycle, the sleep constitutes at least 50%, preferably at least 90%, more preferably at least 99%, even more preferably at least 99.9%, and most preferably at least 99.99% of a full cycle. This results in a less demanding way of using the power resources.

Currently known RF-based sensing arrangements implemented as lighting arrangements however have one drawback with respect to the traditional sensors, i.e. that the sensors (i.e. radios) are necessarily co-located with the light points due to the fact that the radios must be on all the time in order to maintain the radio links that are used for controlling the lighting devices while performing the activity sensing. This limits the freedom of placement of the sensors and therefore can lead to a sub-optimal detection of activity.

Running a dedicated radio device on battery power is not practical for the current RF sensing systems, since the drain of continuously active radio would soon deplete the battery, yielding an insufficient lifetime.

The RF-based sensing arrangement 150, providing that the right conditions, in particular the preferred duration of the active cycle compared to a full cycle together with the use of the preferred transmission power amount for transmitting the wireless communication signals in the operation phase, enables the transmitter node to run from a battery with a sufficient lifetime.

In particular, several implementations of an RF-based sensing arrangement can be done in this way, using either a single battery powered device as a transmitter node in combination with a mains-powered device as a receiver node, or two or more battery-powered devices as transmitter and receiver nodes.

In the RF-based sensing arrangement of Fig. 1, the transmitter node 152 is exemplary represented as a battery powered transmitter node, in particular a battery powered switch or sensor, which can be located at any desired location suitable for performing the RF-based activity sensing and substantially independent on the location of the lighting unit (given that a communication link between them is possible). The transmitter node 152 comprises a battery unit 156 for providing operation power for operating the transmitter node. The transmitter node, as a battery-powered node, is advantageously configured to use an ad hoc connection between itself and the receiver node, this being a mains powered device. This means that the battery-powered node is controlled by the controller to send advertisements on a regular interval during an active mode and to enter the sleep mode in the time in-between two active cycles. These advertisements or wireless communication signals are received by the mains-powered device, which can be configured to scan for a certain fraction of the time or all the time. In an exemplary RF-based sensing arrangement, the mains-powered device is also part of the mesh network, either as a sleepy end device or as a router. It can scan all the time for BLE advertisements if it is not acting as a router device, but is only an end device (sleepy or not). If the mains powered device is chosen to be also a mesh router, then it can only scan for a part of the time, which wastes some of the advertisements, causing a higher battery consumption in the battery powered device than would be possible otherwise.

The fact that battery powered nodes can be placed at any desired location, means that the battery powered nodes could be placed on cleverly chosen positions for RF-based activity sensing application, e.g. on both sides of a corridor (detecting people walking 'through the signal path or multipath', or between lamp posts in a road lighting application, detecting cars/cyclists/pedestrians walking 'through the signal path or multipath', or on both sides of an entrance.

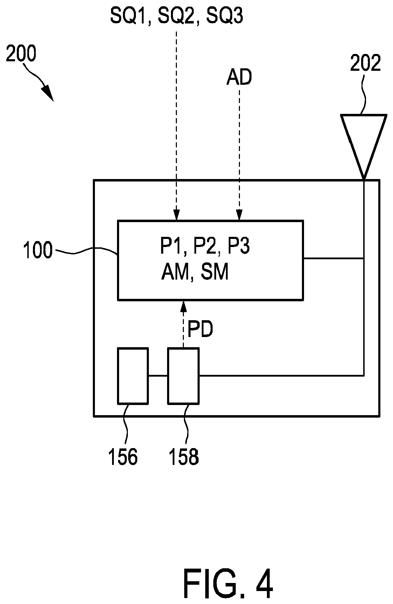

Fig. 4 shows a schematic block diagram of an embodiment of a transmitter node 200 that can be advantageously used in a radiofrequency-based sensing arrangement that is configured to detect activity within a sensing volume using wireless communication signals. The transmitter node comprises a controller 100 and a transmitter 202 connected to the controller 100 and configured to provide wireless communication signals in accordance with the predetermined wireless communication protocol, for example BLE. The transmitter node 200 can also be a transceiver node having both transmitting and receiving capabilities. The same applies to transmitter node 152 and receiver node 154 of Fig. 1. The terms transmitter node and receiver node are thus to be understood in relation to the origin and destination a given wireless communication signal and not to be limitative of the capabilities of the respective node.

The controller 100 is configured to control operation of the transmitter node and the receiver node to determine a preferred transmission power amount Pmin indicative of a minimum transmission power of a wireless communication signal provided by the transmitter node that results in a reliable communication link for wireless communication between the transmitter node and the receiver node. For example, the controller 100 is configured to instruct the transmitter to provide wireless communication signals with different transmission power amounts P1, P2 and P3 and to await for reception of signal quality data SQ1, SQ2 SQ3 for the determination of the preferred transmission power amount. In addition, the controller 100 is configured to control operation the transmitter node in accordance with a signal provision schedule SP that alternates active cycles where the transmitter node is operated in the active mode AM and sleep cycles where the transmitter node is operated in the sleep mode SM, and wherein in the active mode, the wireless communication signals are provided with the determined preferred transmission power amount Pmin.

Preferably, transmitter node 200 is a battery-powered node further comprising a battery unit 156 for providing operation power. In addition, the transmitter node 200 optionally comprises a battery control unit 158 that is arranged and configured to ascertain power supply data PD indicative of a battery state of the battery unit 156 and to provide said power supply data PD to the controller 100.

Advantageously, and regardless of whether the controller is integrated in the transmitter node 200 or not (such as in the case or transmitter node 152 of Fig. 1), the controller 100, is preferably further configured to ascertain or directly receive the power supply data indicative of a power supply state of the transmitter node or the receiver node and to vary the signal provision schedule in dependence on the ascertained power supply data.

If the battery control unit indicates, via the power supply data, that the transmitter devices starts to run down its battery, the controller can be advantageously configured to skip part of the wireless communication signals, in particular some of the keepalive signals provided to the receiver device in order to stay alive as long as possible. In that case, the other device will suffer a longer latency, but the device with the lower battery could still react with the normal latency.

In an example wherein both the transmitter node and the receiver node are battery-powered nodes, the controller can be advantageously configured to control an alternating skipping of some of the keepalive messages in order save battery power. This is preferably agreed between both devices via the controller in order to make sure that there is always at least one device that sends a keepalive packet each connection interval. Again, here the length of the 'shifts' could be negotiated on basis of which device has the best battery.

The controller 100, regardless of whether it is integrated in the transmitter node 200 of Fig. 4 or not, such as in the case of Fig. 1, can be further configured to ascertain (e.g. to receive or to determine) activity data AD indicative of a detection of an activity in the sensing volume V and to vary the signal provision schedule AM, SM in dependence on the ascertained activity data AD.

For instance, the controller 100 may adapt the duration of the active cycles and the sleep cycles in dependence on whether an activity (e.g. a presence or movement of a subject in the sensing volume) has been detected or sensed. The connection interval can be temporarily increased when a presence is detected (by a short exchange between the controller and the transmitter node after detection of the activity), and reduced back to the original connection interval after a specified time.

Additionally, or alternatively, the controller 100 may adapt the duration of the active cycles and the sleep cycles so that a connection interval can be increased when no activity has been detected for a specified (long) time, accepting in that case a somewhat longer latency. After the first detection, the duration of the active cycles and the sleep cycles can then be restored again.

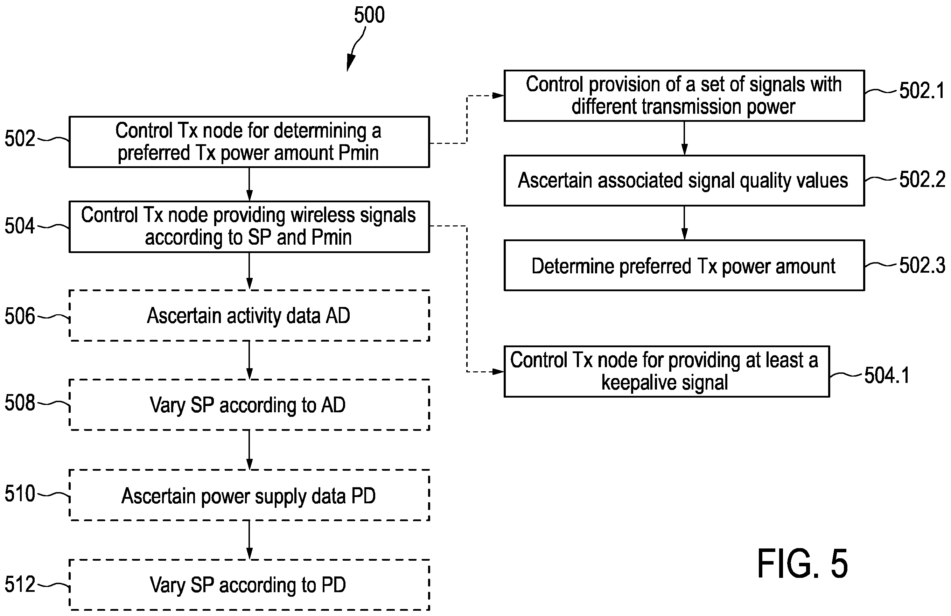

Fig. 5 shows a flow diagram of an embodiment of a method 500 for operating a controller suitable for controlling a radiofrequency-based sensing arrangement that is configured to detect activity within a sensing volume using wireless communication signals, and that comprises at least a transmitter node configured to provide the wireless communication signals according to a wireless communication protocol, and a receiver node configured to receive the provided wireless communication signals, wherein at least the transmitter node is operable in an active mode in which the wireless communication signals are provided and in a sleep mode in which no wireless communication signals are provided. The method comprises, in a step 502, controlling operation of the transmitter node and the receiver node to determine a preferred transmission power amount Pmin indicative of a minimum transmission power of a wireless communication signal provided by the transmitter node that results in a reliable communication link for wireless communication between the transmitter node and the receiver node; and, in a step 504, controlling operation of at least the transmitter node in accordance with a signal provision schedule that alternates active cycles where the transmitter node is operated in the active mode and sleep cycles where the transmitter node is operated in the sleep mode, an wherein in the active mode, the wireless communication signals are provided with the determined preferred transmission power amount. In an embodiment, the step 504 of controlling operation of at least the transmitter node comprises the step of controlling 504.1 operation of at least the transmitter node so that it provides at least one keepalive signal as the wireless communication signal in each active cycle during operation in the active mode according to the signal provision schedule.

In another embodiment, the step 502 of determining the preferred transmission power amount, includes the steps of controlling 502.1 a provision of a set of wireless communication signals with different transmission powers, ascertaining 502.2 a respective signal quality value of the wireless communication signals received at the receiver node, and selecting 502.3, as the preferred transmission power amount, the lowest transmission power from the transmission power of the set of wireless communication signals that results in a signal quality value above a signal quality threshold.

In another embodiment (not shown), the step of determining the preferred transmission power amount is performed for a plurality of communication channels, each associated to a respective frequency band, and wherein, the method includes providing the wireless communication signals using the communication channel for which a lowest preferred transmission power amount has been determined and using the determined preferred transmission power amount.

In yet another embodiment, the method 500 additionally or alternatively comprises the step of ascertaining 506 activity data indicative of a detection of an activity in the sensing volume and varying 508 the signal provision schedule in dependence on the ascertained activity data.

In another embodiment, the method additionally or alternatively comprises the steps of ascertaining 510 power supply data indicative of a power supply state of the transmitter node or the receiver node and varying 512 the signal provision schedule in dependence on the ascertained power supply data.

In summary, the invention is directed to a controller for controlling a radiofrequency-based sensing arrangement that comprises at least a transmitter node configured to provide the wireless communication signals and a receiver node configured to receive the provided wireless communication signals, wherein at least the transmitter node is operable in an active mode and in a sleep mode. The controller is configured to determine a preferred transmission power amount and to control operation of at least the transmitter node in accordance with a signal provision schedule that alternates active cycles where the transmitter node is operated in the active mode and sleep cycles where the transmitter node is operated in the sleep mode. In the active mode, the wireless communication signals are provided with the determined preferred transmission power amount, thus enabling an efficient use of the power resources.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A controller (100) for controlling a radiofrequency-based sensing arrangement (150) that is configured to detect activity within a sensing volume (V) using wireless communication signals (S), and the radiofrequency-based sensing arrangement (150) comprises at least a transmitter node (152) configured to provide the wireless communication signals (S) according to a wireless communication protocol, and a receiver node (154) configured to receive the provided wireless communication signals, wherein at least the transmitter node is operable in an active mode (AM) in which the wireless communication signals are provided and in a sleep mode (SM) in which no wireless communication signals are provided, the controller being configured:
- to control operation of the transmitter node and the receiver node to determine a preferred transmission power amount (Pmin) indicative of a minimum transmission power of a wireless communication signal provided by the transmitter node that results in a reliable communication link for wireless communication between the transmitter node and the receiver node; and
- to control operation of at least the transmitter node in accordance with a signal provision schedule (SP) that alternates active cycles where the transmitter node is operated in the active mode and sleep cycles where the transmitter node is operated in the sleep mode, and wherein in the active mode, the wireless communication signals are provided with the determined preferred transmission power amount.

2. The controller of claim 1, wherein, for determining the preferred transmission power amount, the controller is configured to control a provision of a set of wireless communication signals (S1, S2, S3) with different transmission powers (P1, P2, P3), to ascertain a respective signal quality value (SQ1, SQ2, SQ3) of the wireless communication signals received at the receiver node, and to select, as the preferred transmission power amount, the lowest transmission power from the transmission power of the set of wireless communication signals that results in a signal quality value above a signal quality threshold (SQth).

3. The controller of claim 1 or 2, wherein a respective preferred transmission power amount (Pmin1, Pmin2) is determined for a plurality of communication channels (Ch1, Ch2), each associated to a respective frequency band (f1, f2), and wherein, in the active mode, the transmitter node is operated to provide the wireless communication signals using the communication channel for which a lowest preferred transmission power amount has been determined and using the determined preferred transmission power amount.

4. The controller of any of the preceding claims, further configured to ascertain activity data (AD) indicative of a detection of an activity in the sensing volume and to vary the signal provision schedule in dependence on the ascertained activity data.

5. The controller of any of the preceding claims, further configured to ascertain power supply data (PD) indicative of a power supply state of the transmitter node or the receiver node and to vary the signal provision schedule in dependence on the ascertained power supply data.

6. The controller of any of the preceding claim, further configured to control operation of at least the transmitter node so that it provides at least one keepalive signal (KA) as the wireless communication signal in each active cycle during operation in the active mode according to the signal provision schedule.

7. A transmitter node (200) for a radiofrequency-based sensing arrangement that is configured to detect activity within a sensing volume using wireless communication signals, the transmitter node comprising:
- a controller (100) in accordance with any of the preceding claims 1 to 6;
- a transmitter (202) connected to the controller (100) and configured to provide wireless communication signals in accordance with the predetermined wireless communication protocol.

8. The transmitter node (200) of claim 7, further comprising a battery unit (156) for providing operation power.

9. The transmitter node of claim 8, further comprising a battery control unit (158) that is arranged and configured to ascertain power supply data indicative of a battery state of the battery unit (156) and to provide said power supply data to the controller.

10. A radiofrequency-based sensing arrangement (150), comprising:
- at least one transmitter node (152) configured to provide wireless communication signals (S) according to a wireless communication protocol, wherein the at least one transmitter node is operable in an active mode (AM) in which the wireless communication signals are provided and in a sleep mode (SM) in which no wireless communication signals are provided;
- at least one receiver node (154) configured to receive the transmitted wireless communication signals,
- at least one controller (100) in accordance with any of the claims 1 to 6; and
- an activity determination unit (105), configured to ascertain a signal quality value of the wireless communication signal received by the receiver node, the signal quality value being correlatable to an activity within a sensing volume defined by a communication link between the transmitter node and the receiver node, and to determine an activity within the sensing volume using the ascertained signal quality value.

11. The radiofrequency-based sensing arrangement of claim 10, wherein the activity determination unit is integrated in the receiver node.

12. The radiofrequency-based sensing arrangement of claim 10 or 11, wherein the signal quality value is a received signal strength indicator, indicative of a signal strength of the wireless communication signal as received at the receiver node, or a channel state information, indicative of a channel state of a communication link between the transmitter node and the receiver node.

13. A method (500) for operating a controller suitable for controlling a radiofrequency-based sensing arrangement that is configured to detect activity within a sensing volume using wireless communication signals, and the radiofrequency-based sensing arrangement (150) comprises at least a transmitter node configured to provide the wireless communication signals according to a wireless communication protocol, and a receiver node configured to receive the provided wireless communication signals, wherein at least the transmitter node is operable in an active mode in which the wireless communication signals are provided and in a sleep mode in which no wireless communication signals are provided, the method comprising the steps of:
- controlling (502) operation of the transmitter node and the receiver node to determine a preferred transmission power amount (Pmin) indicative of a minimum transmission power of a wireless communication signal provided by the transmitter node that results in a reliable communication link (CL) for wireless communication between the transmitter node and the receiver node; and
- controlling (504) operation of at least the transmitter node in accordance with a signal provision schedule (SP) that alternates active cycles where the transmitter node is operated in the active mode and sleep cycles where the transmitter node is operated in the sleep mode, and wherein in the active mode, the wireless communication signals are provided with the determined preferred transmission power amount (Pmin).

14. The method of claim 13, wherein the step (504) of controlling operation of at least the transmitter node comprises controlling (504.1) operation of at least the transmitter node so that it provides at least one keepalive signal as the wireless communication signal in each active cycle during operation in the active mode according to the signal provision schedule.

15. A computer program product comprising instructions, which, when the program is executed by a controller, cause the controller to carry out the steps of the method of claim 13 or 14.

## Patentansprüche

1. Steuereinheit (100) zum Steuern einer hochfrequenzbasierten Sensoranordnung (150), die konfiguriert ist, um Aktivitäten innerhalb eines Erfassungsvolumens (V) unter Verwendung von drahtlosen Kommunikationssignalen (S) zu erkennen, und die hochfrequenzbasierte Erfassungsanordnung (150) umfasst mindestens einen Senderknoten (152), der konfiguriert ist, um die drahtlosen Kommunikationssignale (S) gemäß einem drahtlosen Kommunikationsprotokoll bereitzustellen, und einen Empfängerknoten (154), der konfiguriert ist, um die bereitgestellten drahtlosen Kommunikationssignale zu empfangen, wobei mindestens der Senderknoten in einem aktiven Modus (AM), in dem die drahtlosen Kommunikationssignale bereitgestellt werden, und in einem Ruhemodus (sleep mode, SM) betreibbar ist, in dem keine drahtlosen Kommunikationssignale bereitgestellt werden, wobei die Steuereinheit konfiguriert ist:
- zum Steuern des Betriebs des Senderknotens und des Empfängerknotens, um eine bevorzugte Sendeleistung (Pmin) zu ermitteln, die eine Mindestsendeleistung eines durch den Senderknoten bereitgestellten drahtlosen Kommunikationssignals angibt, die zu einer zuverlässigen Kommunikationsverbindung für die drahtlose Kommunikation zwischen dem Senderknoten und dem Empfängerknoten führt; und
- zum Steuern mindestens des Senderknotens gemäß einem Signalbereitstellungsplan (SP), der zwischen aktiven Zyklen, in denen der Senderknoten im aktiven Modus betrieben wird, und Ruhezyklen wechselt, in denen der Senderknoten im Ruhemodus betrieben wird, und wobei im aktiven Modus die drahtlosen Kommunikationssignale mit dem ermittelten bevorzugten Sendeleistungsbetrag bereitgestellt werden.

2. Steuereinheit nach Anspruch 1, wobei die Steuereinheit konfiguriert ist, um die bevorzugte Sendeleistungsmenge zu ermitteln, um eine Bereitstellung eines Satzes von drahtlosen Kommunikationssignalen (S1, S2, S3) mit unterschiedlichen Sendeleistungen (P1, P2, P3) zu steuern, einen jeweiligen Signalqualitätswert (SQ1, SQ2, SQ3) der am Empfängerknoten empfangenen drahtlosen Kommunikationssignale zu bestimmen und als bevorzugte Sendeleistungsmenge die niedrigste Sendeleistung aus der Sendeleistung des Satzes von drahtlosen Kommunikationssignalen auszuwählen, die zu einem Signalqualitätswert oberhalb eines Signalqualitätsschwellenwerts (SQth) führt.

3. Steuereinheit nach Anspruch 1 oder 2, wobei ein jeweiliger bevorzugter Sendeleistungsbetrag (Pmin1, Pmin2) für eine Vielzahl von Kommunikationskanälen (Ch1, Ch2) ermittelt wird, die jeweils einem jeweiligen Frequenzband (f1, f2) zugeordnet sind, und wobei der Senderknoten im aktiven Modus so betrieben wird, dass er die drahtlosen Kommunikationssignale unter Verwendung des Kommunikationskanals, für den ein niedrigster bevorzugter Sendeleistungsbetrag ermittelt wurde, und unter Verwendung des ermittelten bevorzugten Sendeleistungsbetrags bereitstellt.

4. Steuereinheit nach einem der vorstehenden Ansprüche, die ferner konfiguriert ist, um Aktivitätsdaten (AD) zu bestimmen, die eine Erkennung einer Aktivität im Erfassungsvolumen angibt, und den Signalbereitstellungsplan in Abhängigkeit von den herausgefundenen Aktivitätsdaten zu variieren.

5. Steuereinheit nach einem der vorstehenden Ansprüche, der ferner konfiguriert ist, um Stromversorgungsdaten (power suppy data, PD) zu bestimmen, die einen Stromversorgungszustand des Senderknotens oder des Empfängerknotens angeben, und den Signalbereitstellungsplan in Abhängigkeit von den bestimmten Stromversorgungsdaten zu variieren.

6. Steuereinheit nach einem der vorstehenden Ansprüche, die ferner konfiguriert ist, um den Betrieb mindestens des Senderknotens so zu steuern, dass er während des Betriebs im aktiven Modus gemäß dem Signalbereitstellungsplan in jedem aktiven Zyklus mindestens ein Keepalive-Signal (KA) als drahtloses Kommunikationssignal bereitstellt.

7. Senderknoten (200) für eine auf hochfrequenzbasierte Sensoranordnung, der konfiguriert ist, um Aktivitäten innerhalb eines Sensorvolumens unter Verwendung drahtloser Kommunikationssignale zu erkennen, wobei der Senderknoten umfasst:
- eine Steuereinheit (100) nach einem der vorstehenden Ansprüche 1 bis 6;
- einen Sender (202), der mit der Steuereinheit (100) verbunden und konfiguriert ist, um drahtlose Kommunikationssignale gemäß dem vorgegebenen drahtlosen Kommunikationsprotokoll bereitzustellen.

8. Senderknoten (200) nach Anspruch 7, der ferner eine Batterieeinheit (156) zum Bereitstellen von Betriebsstrom umfasst.

9. Senderknoten nach Anspruch 8, der ferner eine Batteriesteuereinheit (158) umfasst, die angeordnet und konfiguriert ist, um Stromversorgungsdaten zu bestimmen, die einen Batteriezustand der Batterieeinheit (156) angeben, und die Stromversorgungsdaten der Steuereinheit bereitzustellen.

10. Hochfrequenzbasierte Sensoranordnung (150), umfassend:
- mindestens einen Senderknoten (152), der konfiguriert ist, um drahtlose Kommunikationssignale (S) gemäß einem drahtlosen Kommunikationsprotokoll bereitzustellen, wobei der mindestens eine Senderknoten in einem aktiven Modus (AM), in dem die drahtlosen Kommunikationssignale bereitgestellt werden, und in einem Ruhemodus (SM) betreibbar ist, in dem keine drahtlosen Kommunikationssignale bereitgestellt werden;
- mindestens einen Empfängerknoten (154), der zum Empfangen der gesendeten drahtlosen Kommunikationssignale konfiguriert ist,
- mindestens eine Steuereinheit (100) nach einem der Ansprüche 1 bis 6; und
- eine Aktivitätsermittlungseinheit (105), die konfiguriert ist, um einen Signalqualitätswert des vom Empfängerknoten empfangenen drahtlosen Kommunikationssignals zu bestimmen, wobei der Signalqualitätswert mit einer Aktivität innerhalb eines Erfassungsvolumens korrelierbar ist, das durch eine Kommunikationsverbindung zwischen dem Senderknoten und dem Empfängerknoten definiert ist, und unter Verwendung des bestimmten Signalqualitätswerts eine Aktivität innerhalb des Erfassungsvolumens zu ermitteln.

11. Hochfrequenzbasierte Sensoranordnung nach Anspruch 10, wobei die Aktivitätsermittlungseinheit in den Empfängerknoten integriert ist.

12. Hochfrequenzbasierte Sensoranordnung nach Anspruch 10 oder 11, wobei der Signalqualitätswert ein Indikator für die empfangene Signalstärke, der eine Signalstärke des drahtlosen Kommunikationssignals angibt, wie es am Empfängerknoten empfangen wird, oder eine Kanalzustandsinformation ist, die einen Kanalzustand einer Kommunikationsverbindung zwischen dem Senderknoten und dem Empfängerknoten angibt.

13. Verfahren (500) zum Betreiben einer Steuereinheit, die zum Steuern einer hochfrequenzbasierten Sensoranordnung geeignet ist, die konfiguriert ist, um Aktivitäten innerhalb eines Erfassungsvolumens unter Verwendung von drahtlosen Kommunikationssignalen zu erkennen, und die hochfrequenzbasierte Erfassungsanordnung (150) umfasst mindestens einen Senderknoten, der konfiguriert ist, um die drahtlosen Kommunikationssignale gemäß einem drahtlosen Kommunikationsprotokoll bereitzustellen, und einen Empfängerknoten, der konfiguriert ist, um die bereitgestellten drahtlosen Kommunikationssignale zu empfangen, wobei mindestens der Senderknoten in einem aktiven Modus, in dem die drahtlosen Kommunikationssignale bereitgestellt werden, und in einem Ruhemodus betreibbar, in dem keine drahtlosen Kommunikationssignale bereitgestellt werden, wobei das Verfahren die Schritte umfasst:
- Steuern (502) des Betriebs des Senderknotens und des Empfängerknotens, um eine bevorzugte Sendeleistung (Pmin) zu ermitteln, die eine Mindestsendeleistung eines durch den Senderknoten bereitgestellten drahtlosen Kommunikationssignals angibt, die zu einer zuverlässigen Kommunikationsverbindung (communication link, CL) für die drahtlose Kommunikation zwischen dem Senderknoten und dem Empfängerknoten führt; und
- Steuern (504) mindestens des Senderknotens gemäß einem Signalbereitstellungsplan (SP), der zwischen aktiven Zyklen, in denen der Senderknoten im aktiven Modus betrieben wird, und Ruhezyklen wechselt, in denen der Senderknoten im Ruhemodus betrieben wird, und wobei im aktiven Modus die drahtlosen Kommunikationssignale mit dem ermittelten bevorzugten Sendeleistungsbetrag (Pmin) bereitgestellt werden.

14. Verfahren nach Anspruch 13, wobei der Schritt (504) des Steuerns des Betriebs mindestens des Senderknotens das Steuern (504.1) des Betriebs mindestens des Senderknotens umfasst, sodass dieser während des Betriebs im aktiven Modus gemäß dem Signalbereitstellungsplan in jedem aktiven Zyklus mindestens ein Keepalive-Signal als drahtloses Kommunikationssignal bereitstellt.

15. Computerprogrammprodukt, das Anweisungen umfasst, die, wenn das Programm durch eine Steuereinheit ausgeführt wird, die Steuereinheit veranlassen, die Schritte des Verfahrens nach Anspruch 13 oder 14 auszuführen.

## Revendications

1. Dispositif de commande (100) permettant de commander un dispositif de détection basé sur des radiofréquences (150) qui est configuré pour détecter une activité dans un volume de détection (V) à l'aide de signaux de communication sans fil (S), et le dispositif de détection basé sur des radiofréquences (150) comprend au moins un nœud émetteur (152) configuré pour fournir les signaux de communication sans fil (S) selon un protocole de communication sans fil, et un nœud récepteur (154) configuré pour recevoir les signaux de communication sans fil fournis, dans lequel au moins le nœud émetteur est exploitable dans un mode actif (AM) dans lequel les signaux de communication sans fil sont fournis et dans un mode veille (SM) dans lequel aucun signal de communication sans fil n'est fourni, le dispositif de commande étant configuré :
- pour commander une exploitation du nœud émetteur et du nœud récepteur afin de déterminer un degré de puissance de transmission préférée (Pmin) indiquant une puissance de transmission minimale d'un signal de communication sans fil fourni par le nœud émetteur qui résulte en une liaison de communication fiable pour une communication sans fil entre le nœud émetteur et le nœud récepteur ; et
- pour commander une exploitation d'au moins le nœud émetteur conformément à une planification de fourniture de signaux (SP) qui alterne des cycles actifs où le nœud émetteur est exploité dans le mode actif et des cycles de veille où le nœud émetteur est exploité dans le mode veille, et dans lequel, dans le mode actif, les signaux de communication sans fil sont fournis avec le degré de puissance de transmission préférée déterminé.

2. Dispositif de commande selon la revendication 1, dans lequel, pour déterminer le degré de puissance de transmission préférée, le dispositif de commande est configuré pour commander une fourniture d'un ensemble de signaux de communication sans fil (S1, S2, S3) avec différentes puissances de transmission (P1, P2, P3), pour vérifier une valeur de qualité de signal respective (SQ1, SQ2, SQ3) des signaux de communication sans fil reçus au niveau du nœud récepteur, et pour sélectionner, en tant que degré de puissance de transmission préférée, la puissance de transmission la plus faible parmi les puissances de transmission de l'ensemble de signaux de communication sans fil qui résulte en une valeur de qualité de signal supérieure à un seuil de qualité de signal (SQth).

3. Dispositif de commande selon la revendication 1 ou 2, dans lequel un degré de puissance de transmission préférée (Pmin1, Pmin2) respectif est déterminé pour une pluralité de canaux de communication (Ch1, Ch2), chacun associé à une bande de fréquence respective (f1, f2), et dans lequel, dans le mode actif, le nœud émetteur est exploité pour fournir les signaux de communication sans fil à l'aide du canal de communication pour lequel un degré de puissance de transmission préférée le plus faible a été déterminé et à l'aide du degré de puissance de transmission préférée déterminé.

4. Dispositif de commande selon l'une quelconque des revendications précédentes, configuré en outre pour vérifier des données d'activité (AD) indiquant une détection d'une activité dans le volume de détection et pour modifier la planification de fourniture de signaux en fonction des données d'activité vérifiées.

5. Dispositif de commande selon l'une quelconque des revendications précédentes, configuré en outre pour vérifier des données d'alimentation électrique (PD) indiquant un état d'alimentation électrique du nœud émetteur ou du nœud récepteur et pour modifier la planification de fourniture de signaux en fonction des données d'alimentation électrique vérifiées.

6. Dispositif de commande selon l'une quelconque des revendications précédentes, configuré en outre pour commander l'exploitation d'au moins le nœud émetteur de sorte qu'il fournit au moins un signal keepalive (KA) en tant que signal de communication sans fil dans chaque cycle actif pendant une exploitation dans le mode actif selon la planification de fourniture de signaux.

7. Nœud émetteur (200) pour un dispositif de détection basé sur des radiofréquences qui est configuré pour détecter une activité dans un volume de détection à l'aide de signaux de communication sans fil, le nœud émetteur comprenant :
- un dispositif de commande (100) selon l'une quelconque des revendications 1 à 6 ;
- un émetteur (202) connecté au dispositif de commande (100) et configuré pour fournir des signaux de communication sans fil conformément au protocole de communication sans fil prédéterminé.

8. Nœud émetteur (200) selon la revendication 7, comprenant en outre une unité de batterie (156) pour fournir une puissance nécessaire à l'exploitation.

9. Nœud émetteur selon la revendication 8, comprenant en outre une unité de commande de batterie (158) qui est conçue et configurée pour vérifier des données d'alimentation électrique indiquant un état de batterie de l'unité de batterie (156) et pour fournir lesdites données d'alimentation électrique au dispositif de commande.

10. Dispositif de détection basé sur des radiofréquences (150) comprenant :
- au moins un nœud émetteur (152) configuré pour fournir des signaux de communication sans fil (S) selon un protocole de communication sans fil, dans lequel l'au moins un nœud émetteur est exploitable dans un mode actif (AM) dans lequel les signaux de communication sans fil sont fournis et dans un mode de veille (SM) dans lequel aucun signal de communication sans fil n'est fourni ;
- au moins un nœud récepteur (154) configuré pour recevoir les signaux de communication sans fil transmis,
- au moins un dispositif de commande (100) selon l'une quelconque des revendications 1 à 6 ; et
- une unité de détermination d'activité (105), configurée pour vérifier une valeur de qualité de signal de communication sans fil reçu par le nœud récepteur, la valeur de qualité de signal pouvant être mise en corrélation avec une activité dans un volume de détection défini par une liaison de communication entre le nœud émetteur et le nœud récepteur, et pour déterminer une activité dans le volume de détection à l'aide de la valeur de qualité de signal vérifiée.

11. Dispositif de détection basé sur des radiofréquences selon la revendication 10, dans lequel l'unité de détermination d'activité est intégrée dans le nœud récepteur.

12. Dispositif de détection basé sur des radiofréquences selon la revendication 10 ou 11, dans lequel la valeur de qualité de signal est un indicateur d'intensité de signal reçu, indiquant une intensité de signal de communication sans fil comme étant reçu au niveau du nœud récepteur, ou des informations d'état de canal, indiquant un état de canal d'une liaison de communication entre le nœud émetteur et le nœud récepteur.

13. Procédé (500) permettant d'exploiter un dispositif de commande apte à commander un dispositif de détection basé sur des radiofréquences qui est configuré pour détecter une activité dans un volume de détection à l'aide de signaux de communication sans fil, et le dispositif de détection basé sur des radiofréquences (150) comprend au moins un nœud émetteur configuré pour fournir les signaux de communication sans fil selon un protocole de communication sans fil, et un nœud récepteur configuré pour recevoir les signaux de communication sans fil fournis, dans lequel au moins le nœud émetteur est exploitable dans un mode actif dans lequel les signaux de communication sans fil sont fournis et dans un mode de veille dans lequel aucun signal de communication sans fil n'est fourni, le procédé comprenant les étapes consistant à :
- commander (502) une exploitation du nœud émetteur et du nœud récepteur pour déterminer un degré de puissance de transmission préférée (Pmin) indiquant une puissance de transmission minimale d'un signal de communication sans fil fourni par le nœud émetteur qui résulte en une liaison de communication fiable (CL) pour une communication sans fil entre le nœud émetteur et le nœud récepteur ; et
- commander (504) une exploitation d'au moins le nœud émetteur conformément à une planification de fourniture de signaux (SP) qui alterne des cycles actifs où le nœud émetteur est exploité dans le mode actif et des cycles de veille où le nœud émetteur est exploité dans le mode veille, et dans lequel, dans le mode actif, les signaux de communication sans fil sont fournis avec le degré de puissance de transmission préférée (Pmin) déterminé.

14. Procédé selon la revendication 13, dans lequel l'étape (504) de commande d'une exploitation d'au moins le nœud émetteur consiste à commander (504.1) une exploitation d'au moins le nœud émetteur de sorte qu'il fournit au moins un signal keepalive en tant que signal de communication sans fil dans chaque cycle actif pendant une exploitation dans le mode actif selon la planification de fourniture de signaux.

15. Produit-programme informatique comprenant des instructions qui, lorsque le programme est exécuté par un dispositif de commande, amènent le dispositif de commande à effectuer les étapes du procédé selon la revendication 13 ou 14.
